# EUROPÄISCHE PATENTSCHRIFT

(11) **EP 1 793 713 B1**
(45) Veröffentlichungstag und Bekanntmachung des Hinweises auf die Patenterteilung: **09.02.2011**
(21) Anmeldenummer: 05794603.0
(22) Anmeldetag: 22.09.2005
(51) Int. Cl.: A47J 31/06

(54) **KAFFEEMASCHINE MIT EINER BRÜHKAMMER**
COFFEE MACHINE WITH A BREWING CHAMBER
MACHINE A CAFE COMPORTANT UNE CHAMBRE D'INFUSION

(30) Priorität: 24.09.2004 DE 102004046433
(43) Veröffentlichungstag der Anmeldung: 13.06.2007
(73) Patentinhaber: BSH Bosch und Siemens Hausgeräte GmbH, 81739 München (DE)
(72) Erfinder: MAGG, Johannes, 83368 St. Georgen (DE); MAYR, Andreas, 83254 Breitbrunn (DE); STEFFL, Michael, 83250 Marquartstein (DE)
(86) Internationale Anmeldenummer: PCT/EP2005/054756
(87) Internationale Veröffentlichungsnummer: WO 2006/032691

(56) Entgegenhaltungen:
- WO-A-02/38016
- DE-A1-102004 004 819
- US-A- 5 794 519
- US-A1- 2002 148 356

## Beschreibung

Die Erfindung betrifft eine Kaffeemaschine gemäß dem Anspruch 1.

Kaffeemaschinen des Standes der Technik arbeiten nach unterschiedlichen Prinzipien. Die gängigsten Modelle sind die sogenannten drucklos arbeitenden Kaffeemaschinen. Bei diesen fließt Wasser aus einem Vorratsbehälter in ein elektrisch beheizbares Rohr. Insbesondere durch Dampfentwicklung in diesem Rohr wird erwärmtes Wasser dann durch eine Steigleitung zu einem Auslauf gedrückt, über welchen das erwärmte Wasser dann in einen Kaffeefilter tropft. Aus diesem Kaffeefilter kann der Filterkaffee bei atmosphärischem Druck dann in eine Kanne fließen.

Im Gegensatz hierzu liegt bei Espressomaschinen ein erhöhter Druck im Bereich des Kaffeemehls vor, beispielsweise 15 bar. Dies wird erreicht, indem Wasser aus einem Wasserbehälter oder einer sonstigen Wasserzuführung einer elektromotorisch angetriebenen Pumpe zugeführt wird, die das Wasser dann unter hohem Druck über einen elektrisch heizbaren Bereich einer Kaffeemehlaufnahmeeinrichtung zuführt. Diese Kaffeemehlaufnahmeeinrichtung umfasst im Allgemeinen ein Sieb zur Aufnahme des Kaffees. Zur Erzeugung des hohen Drucks im Bereich des Kaffees ist die Kaffeemehlaufnahmeeinrichtung während des Betriebs in einem gegen die Atmosphäre abgedichteten Bereich angeordnet, der als Druckraum oder Brühkammer bezeichnet wird.

Bei einer weiteren prinzipiell anders arbeitenden Kaffeemaschine ist vorgesehen, das Wasser zur Zubereitung des Kaffees zunächst aus einem Wasserbehälter in einen beheizbaren Zwischenbehälter zu überführen. Von diesem Zwischenbehälter gelangt das erwärmte Wasser zu einer elektromotorisch angetriebenen Pumpe, von der es unter erhöhtem Druck, beispielsweise 2 bis 3 bar, einer in einer abgedichteten Brühkammer vorgesehenen Kaffeemehlaufnahmeeinrichtung zugeführt wird.

Bei einer besonderen, als sog. Kaffeepad-Maschine bezeichneten Form von Kaffeemaschinen mit einer Brühkammer, ist vorgesehen, dass der Kaffee nicht in loser Form als Kaffeemehl in die Kaffeemehlaufnahmeeinrichtung eingebracht wird, sondern in Form eines Kaffeepads, das heißt in verdichteter Form mit Filterpapier umgeben, in einen Halter eingelegt wird. Der Halter ist in einer Brühkammer angeordnet, die aus einem Brühkammeroberteil und einem dichtend mit diesem verbindbaren Brühkammerunterteil gebildet wird. Über das Brühkammeroberteil wird erhitztes Wasser bzw. Dampf in die Brühkammer zugeführt. Der Halter für die Kaffeepads kann Teil des Brühkammerunterteils oder als separates Teil in dieses eingesetzt sein. Das Brühkammerunterteil weist eine Auslassöffnung auf, aus der bereiteter Kaffee austreten kann. Der Halter kann so gestaltet sein, dass das erhitzte Wasser bzw. der Dampf weitestgehend ungehindert die Kaffeepads durchströmen kann.

Die WO 01/15582 A1 betrifft eine Kaffeemaschine, der das Kaffeemehl in Form von Kaffeepads zugeführt wird. Die Kaffeepads werden in ein Unterteil der Brühkammer eingelegt. Das Oberteil der Brühkammer kann mittels eines Scharniers auf das Unterteil geklappt werden, wobei eine einrastende Verbindung zwischen den beiden Brühkammerteilen für eine Abdichtung der Brühkammer sorgt. Nachteilig an diesem System ist, dass Kaffeepads nach dem Brühvorgang bei Öffnen der Brühkammer an dem Brühkammeroberteil hängen bleiben können. Diese müssen von Hand entfernt werden, was wegen der hohen Temperatur der Pads unmittelbar nach dem Brühvorgang für den Benutzer mit Verbrühungsgefahr verbunden ist.

Aus der EP 1 050 258 A1 ist eine Kaffeemaschine bekannt, bei der Kaffeepads in eine ausfahrbare Schublade einlegbar sind. Die Schublade kann durch Einfahren in Brühposition gebracht werden. Zur Abdichtung der Brühkammer wird vor dem Brühvorgang ein Brühkammeroberteil automatisch auf das Brühkammerunterteil gefahren. Nach Beendigung des Brühvorgangs wird das Brühkammeroberteil automatisch nach oben gefahren und der Kaffeepad fällt nach seitlichem Verschieben des Brühkammerunterteils in einen internen Entsorgungsbehälter. Um einem Anhaften des Kaffeepads am Brühkammerober- und/oder -unterteil entgegenzuwirken wird der Kaffeepad durch eine Zange in Position gehalten. Aufgrund der Vielzahl motorisch bewegbarer Komponenten, die jeweils unabhängige Bewegungen durchzuführen haben ist der zugrunde liegende Mechanismus komplex und daher in der Herstellung teuer und im Betrieb störanfällig.

Die US 5 794 519 A offenbart eine eine Kaffeemaschine zur Bereitung von Kaffee auf Basis von Kaffeepads, mit einer Brühkammer, umfassend ein Abdrückelement, das als ein durch Betätigung eines Einfahrmechanismus aktiv in die Brühkammer einfahrbares Element ausgestaltet ist, durch welches ein Kaffeepad mit einer nach unten gerichteten Kraft beaufschlagbar ist.

Aufgabe der Erfindung ist es, eine gattungsgemäße Kaffeemaschine derart weiterzubilden, dass ein zuverlässiges Lösen des Kaffeepads nach dem Brühvorgang aus der Brühkammer mit einfachen und kostengünstigen Mitteln realisiert wird.

Diese Aufgabe wird mit den Merkmalen des unabhängigen Anspruchs 1 gelöst.

Vorteilhafte Ausführungsformen der Erfindung sind in den abhängigen Ansprüchen angegeben.

Die Erfindung baut auf der gattungsgemäßen Kaffeemaschine dadurch auf, dass ein Abdrückelement zum Abdrücken eines an dem Brühkammeroberteil haftenden Kaffeepads als ein durch Betätigung eines vorzugsweise äußeren Einfahrmechanismus aktiv in die Brühkammer einfahrbares Element ausgestaltet ist, durch welches der Kaffeepad mit einer nach unten gerichteten Kraft beaufschlagbar ist. Durch das aktive Einfahren des Abdrückelementes in die Brühkammer wird das Problem des Anhaftens des Kaffeepads vollständig überwunden und zwar unabhängig von der Haftkraft, die z.B. bei einem angetrockneten Kaffeepad erheblich sein kann. Zudem lässt sich ein das Brühkammeroberteil durchgreifender Einfahrmechanismus einfach, robust und kostengünstig realisieren.

Der Einfahrmechanismus ist als ein manuell bedienbarer Hebelmechanismus ausgestaltet. Durch den Hebelmechanismus können nahezu beliebige Kraft- und Wegübersetzungen realisiert werden, sodass die zum sicheren Lösen des Kaffepads erforderlichen Wege und Kräfte mit den für den Benutzer angenehmen Wege und Kräfte vereinbar sind. Zudem ist ein manueller Mechanismus einfach, robust und raumsparend.

Bei einer besonders günstigen Ausführungsform der Erfindung ist vorgesehen, dass durch den Hebelmechanismus zusätzlich eine im Wesentlichen vertikale Bewegung des Brühkammerunterteils relativ zu dem Brühkammeroberteil zum Zwecke des öffnens und Schließens der dichtenden Verbindung zwischen Brühkammerober- und -unterteil durchführbar ist. Auf diese Weise wird das Abdrücken des gebrauchten Kaffeepads auf natürliche Weise mit einem zum Betrieb der Kaffeemaschine ohnehin notwendigen Bedienungsschritt kombiniert. Mit dem zum Vorbereiten des nächsten Brühvorgangs notwendigen Öffnen der Brühkammer wird das im vorangegangenen Brühvorgang benutzte Kaffepad automatisch aktiv abgedrückt, sodass der Benutzer keinen zusätzlichen Schritt durchzuführen hat.

Günstigerweise ist vorgesehen, dass das Abdrückelement als ein in einem Stößelkanal durch das Brühkammeroberteil geführter Stößel ausgebildet ist. Dies stellt eine besonders einfache und effektive Gestaltung dar. Eine Ansteuerung des Stößels durch einen äußeren Mechanismus, insbesondere einen Hebelmechanismus ist leicht realisierbar. Alternativ könnte auch ein im Brühkammeroberteil gelagerter Hebel, der von einem Steuerstößel angesteuert wird, vorgesehen sein.

Vorteilhafterweise sollte wenigstens im geschlossenen Zustand der Brühkammer eine Durchführung des Einfahrmechanismus bzw. des Abdrückelements durch das Brühkammeroberteil gegen den Innenraum der Brühkammer abgedichtet sein. Während des Brühvorgangs herrscht in der Brühkammer nämlich ein Überdruck. Eine Abdichtung der zur Verbindung des mit dem Kaffeepad wechselwirkenden Teils des Abdrückelements mit dem äußeren Einfahrmechanismus notwendigen Durchführung verhindert ein unerwünschtes Entweichen des Drucks bzw. des Wasserdampfs aus der Brühkammer.

Dies kann bei einer günstigen Ausführungsform dadurch realisiert sein, dass der mit dem Kaffeepad wechselwirkende Bereich des Abdrückelements räumlich derart ausgestaltet ist, dass im nicht in die Brühkammer eingefahrenen Zustand eine formschlüssige Abdichtung der Durchführung erfolgt. Beispielsweise kann ein im Brühkammeroberteil gelagerter, flacher Hebel vorgesehen sein, der sich im geschlossenen Zustand der Brühkammer dichtend an deren innere Oberfläche, insbesondere in eine entsprechende Ausnehmung, schmiegt.

Bei einer anderen Ausführungsform kann vorgesehen sein, dass das Abdrückelement mittelbar über ein die Durchführung abdichtendes Folienelement auf den Kaffeepad wirkt. Beispielsweise kann eine elastische und reißfeste Kunststofffolie über den Eintrittsbereich des Abdrückelements in die Brühkammer gespannt sein, die sich beim Einfahren des Abdrückelementes elastisch verformt. Auch eine Abdichtung in Form einer Faltenbalgkammer ist denkbar.

Bei einer noch anderen Ausführungsform können ein Steuergestänge oder das Abdrückelement selbst in einer Führung durch das Brühkammeroberteil, z.B. durch O-Ringe, dichtend gelagert sein.

Die Erfindung ist anhand der Figuren näher erläutert. Es zeigen:
- Figur 1: eine perspektivische Ansicht einer erfindungsgemäßem Kaffeemaschine;
- Figur 2: eine Schnittansicht der Kaffeemaschine von Figur 1;
- Figur 3: eine Schnittansicht eines Brühkammerunterteils der Kaffeemaschine von Figur 1;
- Figur 4: zwei perspektivische Darstellungen eine Brühkammer im geschlossenen Zu- stand (a) und im geöffneten Zustand (b);
- Figur 5: zwei Schnittdarstellung eine Brühkammer im geschlossenen Zustand (a) und im geöffneten Zustand (b);

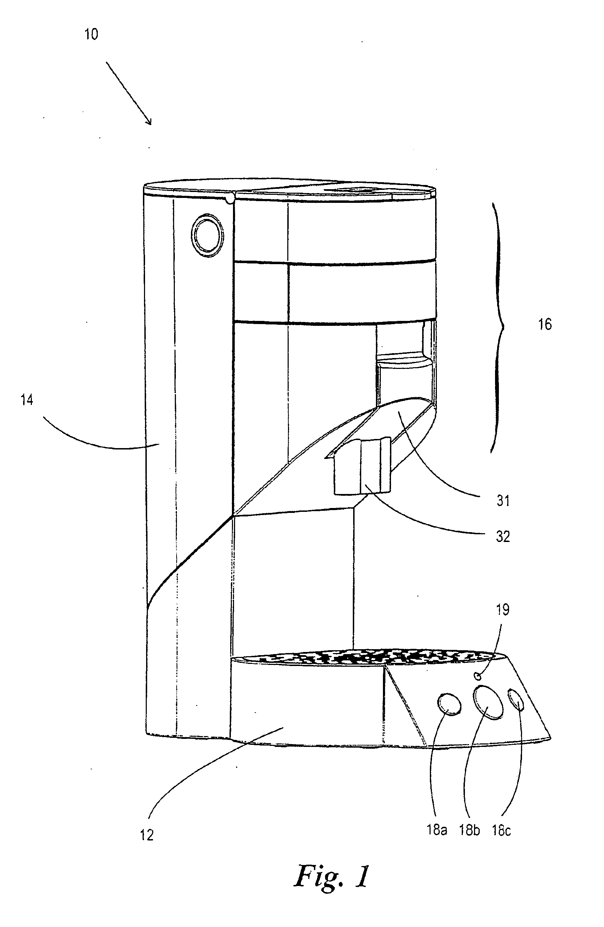

Figur 1 zeigt eine perspektivische Darstellung einer Kaffeemaschine 10. Die Kaffeemaschine 10 umfasst einen flachen Ständerteil 12, einen säulenartigen Vorrats- und Betriebsteil 14 und einen Kaffeebereitungsteil 16. Der Kaffeebereitungsteil 16 ist oberhalb des Ständerteils 12 an dem Vorrats- und Betriebsteil angeordnet. Im vorderen Bereich des Ständerteils 12 ist ein Bedienfeld mit mehreren Bedientasten 18a, 18b und 18c sowie einer Kontrollleuchte 19 angeordnet.

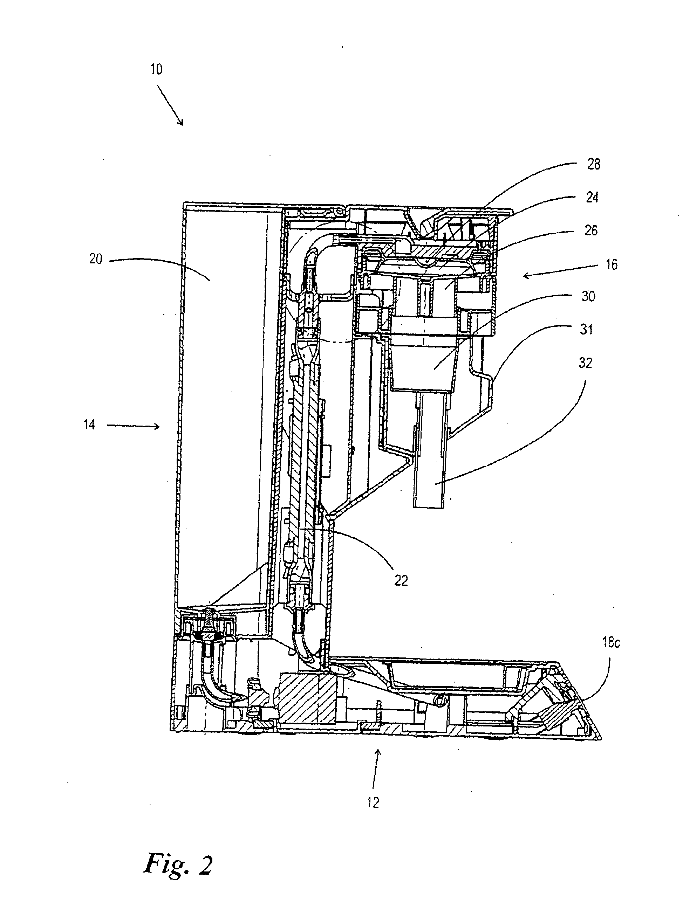

Figur 2 zeigt eine Schnittdarstellung derselben Kaffeemaschine 10. Der Vorrats- und Betriebsteil umfasst im Wesentlichen einen Wassertank 20, einen Durchlauferhitzer 22, eine nicht dargestellte Pumpe sowie verschiedene Verbindungsleitungen zwischen den genannten Elementen. Der Kaffeebereitungsteil 16 umfasst eine Brühkammer 24, umfassend ein Brühkammerunterteil 26 sowie ein Brühkammeroberteil 28. Unterhalb der Brühkammer 24 ist ein Auslauftopf 30 vorgesehen, in welchen bereiteter Kaffee von der Brühkammer 24 läuft. Der Auslauftopf 30 weist ein Auslaufrohr 32 auf, über welches bereiteter Kaffee in einen auf dem Ständerteil 12 bereitgestellten Auffangbehälter, z.B. eine Tasse, läuft. Der Auslauftopf ist von einem Auslaufgehäuse 31 umgeben.

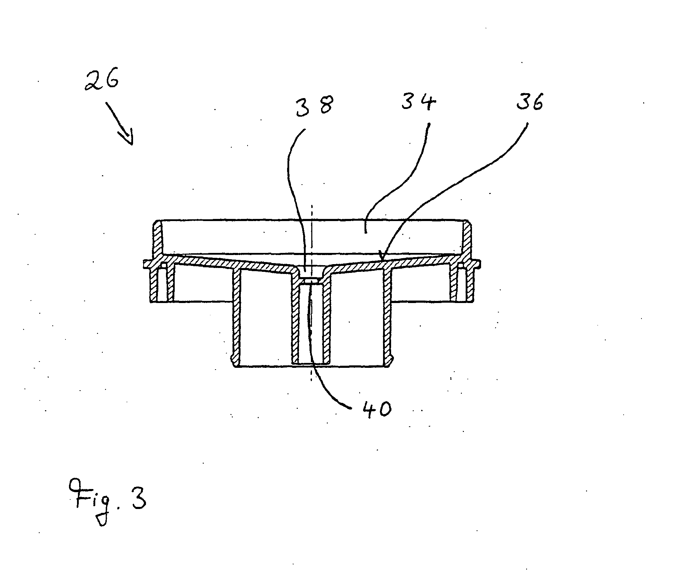

Figur 3 zeigt eine Schnittzeichnung durch das Brühkammerunterteil 26. Das Brühkammerunterteil 26 weist eine vorzugsweise runde Aufnahme 34 für (nicht dargestellte) Kaffeepads auf. Der Boden 36 der Aufnahme 34 ist vorzugsweise auf eine zentrale Vertiefung 38 hin abfallend ausgebildet. Zur Kaffeebereitung wird das Brühkammerunterteil 26 mit einem in Figur 3 nicht dargestellten Brühkammeroberteil dichtend verbunden, so dass erhitztes Brühwasser unter Druck den Kaffeepad in der Aufnahme 34 durchdringen kann. Der Kaffee wird dann durch eine Düse 40 in der zentralen Vertiefung 38 in den unter der Brühkammer 24 angeordneten Auslauftopf 30 gespritzt.

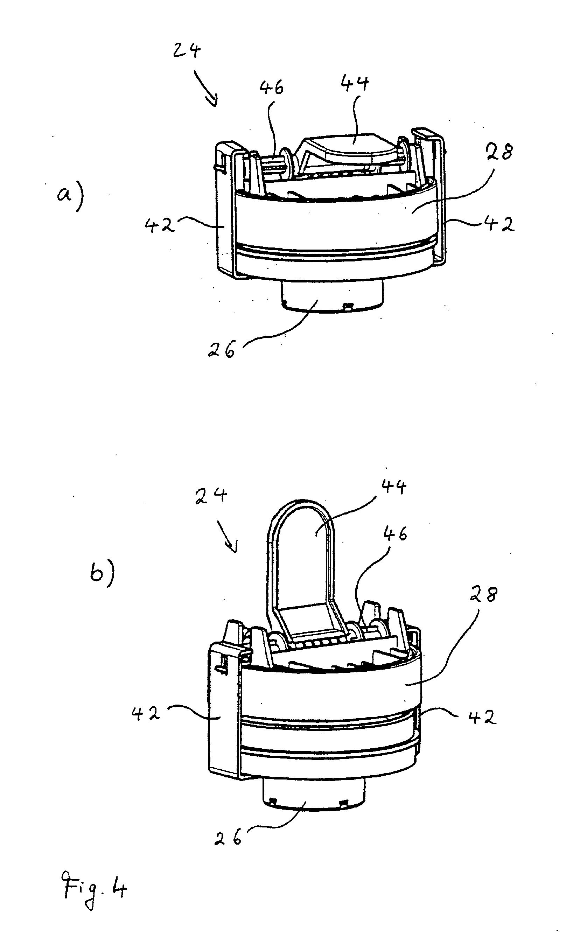

Figur 4 zeigt zwei perspektivische Darstellungen der Brühkammer 24 und zwar im geschlossenen (Figur 4a) und im offenen (Figur 4b) Zustand. Zur Schaffung einer druckdichten Brühkammer 24 müssen das Brühkammerunterteil und das Brühkammeroberteil dichtend miteinander verbunden werden. Dies erfolgt mittels zweier Spannbügel 42, die durch einen Klapphebel 44 über einen Hebelmechanismus 46 betätigt werden. Dabei wird das Brühkammerunterteil 26 von unten von den Spannbügeln 42 hintergriffen und bei Betätigung des Klapphebels 44 gegen das Oberteil gepresst.

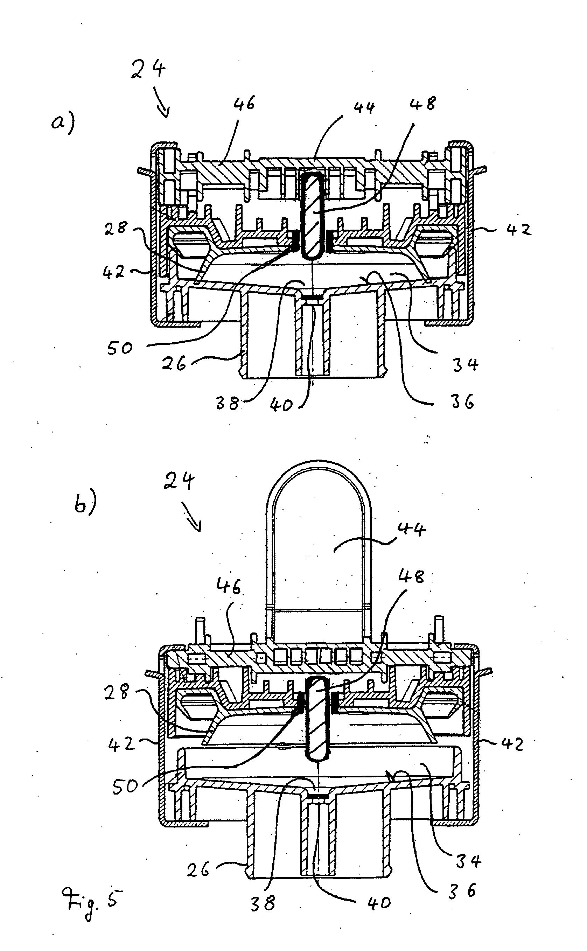

Figur 5 zeigt einen Schnitt durch die Brühkammer 24 und zwar im geschlossenen (Figur 5a) und im geöffneten (Figur 5b) Zustand. Wie in Figur 5 erkennbar, wird mit dem Klapphebel 44 ein Abdrückdorn 48 bewegt. Der Abdrückdorn 48 durchsetzt die Deckelschale des Brühkammeroberteils und wird beim Öffnen des Klapphebels in die Brühkammer 24 eingefahren. Hierdurch wird ein evtl. an dem Brühkammeroberteil anhaftender Kaffeepad aktiv nach unten abgedrückt und fällt in die Aufnahme 34. Bei der in Figur 5 dargestellten Ausführungsform wird der Kanal, in welchem das Abdrückelement 48 den Deckel des Brühkammeroberteils 28 durchsetzt, mittels einer dichtenden Führung 50 abgedichtet. Diese ist einem temperaturbeständigen, elastischen Kunststoff gefertigt, der vorteilhafterweise nur eine geringe Reibung mit dem Abdrückelement 48 aufweist. Sie stellt eine Führung des Abdrückelements 48 dar. Wenn die Brühkammer 24 mit Druck beaufschlagt wird, dichtet sie den Kanal des Abdrückelementes 48 ab und verhindert ein Entweichen des Drucks bzw. Dampfes in der Brühkammer 24.

Die in der vorstehenden Beschreibung, in den Zeichnungen sowie den Ansprüchen offenbarten Merkmale der Erfindung können sowohl einzeln als auch in beliebiger Kombination für die Verwirklichung der Erfindung wesentlich sein.

### Bezugszeichenliste

- 10: Kaffeemaschine
- 12: Ständerteil
- 14: Vorrats- und Betriebsteil
- 16: Kaffeebereitungsteil
- 18: a-c Bedientasten
- 19: Kontrollleuchte
- 20: Wassertank
- 22: Durchlauferhitzer
- 24: Brühkammer
- 26: Brühkammerunterteil
- 28: Brühkammeroberteil
- 30: Auslauftopf
- 31: Auslaufgehäuse
- 32: Auslaufrohr
- 34: Aufnahme
- 36: Aufnahmeboden
- 38: Zentralöffnung
- 40: Düse
- 42: Spannbügel
- 44: Klapphebel
- 46: Hebelmechanismus
- 48: Abdrückelement
- 50: dichtende Führung

## Patentansprüche

1. Kaffeemaschine zur Bereitung von Kaffee auf Basis von Kaffeepads, mit einer Brühkammer (24), umfassend ein Brühkammerunterteil (26) mit einem Kaffeepadhalter zur Aufnahme eines Kafleepads, ein dichtend mit dem Brühkammerunterteil verbindbares Brühkammeroberteil (28), und ein Abdrückelement (48) zum Abdrücken eines an dem Brühkammeroberteil (28) haftenden Kafleepads, das als ein durch Betätigung eines Einfahrmechanismus (44, 46) aktiv in die Brühkammer (24) einfahrbares Element ausgestaltet ist, durch welches der Kaffeepad mit einer nach unten gerichteten Kraft beaufschlagbar ist, **dadurch gekennzeichnet, dass** der Einfahrmechanismus als ein von außerhalb der Brühkammern manuell bedienbarer Hebelmechanismus (44, 46) ausgestaltet ist.

2. Kaffeemaschine nach Anspruch 1, **dadurch gekennzeichnet, dass** durch den Hebelmechanismus (44, 46) zusätzlich eine im Wesentlichen vertikale Bewegung des Brühkammerunterteils (42) relativ zu dem Brühkammeroberteil zum Zwecke des Öffnens und Schließens der dichtenden Verbindung zwischen Brühkammerober- und -unterteil durchführbar ist.

3. Kaffeemaschine nach Anspruch 1 oder 3, **dadurch gekennzeichnet, dass** das Abdrückelement als ein in einem Stößelkanal durch das Brühkammeroberteil (28) geführter Stößel (48) ausgebildet ist.

4. Kaffeemaschine nach einem der Ansprüche 1 bis 43, **dadurch gekennzeichnet, dass** wenigstens im geschlossenen Zustand der Brühkammer (24) eine Durchführung des Einfahrmechanismus oder des Abdrückelementes (48) durch das Brühkammeroberteil (28) gegen den Innenraum der Brühkammer abgedichtet ist.

5. Kaffeemaschine nach Anspruch 4, **dadurch gekennzeichnet, dass** der mit dem Kaffeepad wechselwirkende Bereich des Abdrückelements (48) räumlich derart ausgestaltet ist, dass im nicht in die Brühkammer (24) eingefahrenen Zustand eine formschlüssige Abdichtung der Durchführung erfolgt.

6. Kaffeemaschine nach Anspruch 4, **dadurch gekennzeichnet, dass** das Abdrückelement (48) mittelbar über ein die Durchführung abdichtendes Folienelement auf den Kaffeepad wirkt.

7. Kaffeemaschine nach Anspruch 4, **dadurch gekennzeichnet, dass** ein Steuergestänge des Abdrückelements oder das Abdrückelement selbst in seiner Führung (50) durch das Brühkammeroberteil (28), dichtend gelagert ist.

## Claims

1. Coffee machine for preparing coffee on the basis of coffee pads, with a brewing chamber (24), comprising a brewing chamber lower part (26) with a coffee pad holder for receiving a coffee pad, a brewing chamber upper part (28) sealingly connectible with the brewing chamber lower part and a pressing-down element (48) for pressing down a coffee pad adhering to the brewing chamber upper part (28), the pressing-down element being designed as an element which is actively movable into the brewing chamber (24) by actuation of a moving-in mechanism (44, 46) and by which the coffee pad can be loaded with a downwardly directed force, **characterised in that** the moving-in mechanism is designed as a lever mechanism (44, 46) manually operable from outside the brewing chamber.

2. Coffee machine according to claim 1, **characterised in that** a substantially vertical movement of the brewing chamber lower part (42) relative to the brewing chamber upper part for the purpose of opening and closing the sealing connection between brewing chamber upper part and brewing chamber lower part can be additionally performed by the lever mechanism (44, 46).

3. Coffee machine according to claim 1 or 2, **characterised in that** the pressing-down element is constructed as a plunger (48) guided through the brewing chamber upper part (28) in a plunger channel.

4. Coffee machine according to any one of claims 1 to 3, **characterised in that** at least in the closed state of the brewing chamber (24) a passage of the moving-in mechanism or of the pressing-down element (48) through the brewing chamber upper part (28) is sealed off relative to the interior space of the brewing chamber.

5. Coffee machine according to claim 4, **characterised in that** the region of the pressing-down element (48) interacting with the coffee pad is physically designed in such a manner that a mechanically positive sealing of the passage is effected in the state of not being moved into the brewing chamber (24).

6. Coffee machine according to claim 4, **characterised in that** the pressing-down element (48) acts on the coffee pad indirectly by way of a foil element sealing off the passage.

7. Coffee machine according to claim 4, **characterised in that** a control linkage of the pressing-down element or the pressing-down element itself, is sealingly mounted in its guide (50) through the brewing chamber upper part (28).

## Revendications

1. Machine à café destinée à la préparation de café à base de dosettes de café, comportant une chambre d'infusion (24), présentant une partie inférieure de chambre d'infusion (26) pourvue d'un support à dosette à café destiné à recevoir une dosette à café, une partie supérieure de chambre d'infusion (28) pouvant être connectée de façon étanche à la partie inférieure de chambre d'infusion et un élément poussoir (48) destiné à éjecter une dosette à café adhérant à la partie supérieure de chambre d'infusion (28), qui est conçu en tant qu'élément pouvant être enfoncé activement dans la chambre d'infusion (24) par l'actionnement d'un mécanisme d'enfoncement extérieur (44, 46), élément par lequel la dosette à café peut être soumise à une force dirigée vers le bas, **caractérisée en ce que** le mécanisme d'enfoncement est conçu sous forme d'un mécanisme à levier (44, 46) pouvant être actionné manuellement par l'extérieur des chambres d'infusion.

2. Machine à café selon la revendication 1, **caractérisée en ce qu'**en supplément un déplacement sensiblement vertical de la partie inférieure de chambre d'infusion (42) par rapport à la partie supérieure de chambre d'infusion peut être effectué par le mécanisme de levier (44, 46) pour l'ouverture et la fermeture de la liaison étanche entre la partie supérieure et la partie inférieure de chambre d'infusion.

3. Machine à café selon la revendication 1 ou 2, **caractérisée en ce que** l'élément poussoir est conçu sous forme d'un coulisseau (48) guidé dans un canal de coulisseau à travers la partie supérieure de chambre d'infusion (28).

4. Machine à café selon l'une quelconque des revendications 1 à 3, **caractérisée en ce qu'**un passage du mécanisme d'enfoncement ou de l'élément poussoir (48) à travers la partie supérieure de chambre d'infusion (28) est rendu étanche par rapport à l'espace interne de la chambre d'infusion au moins lorsque la chambre d'infusion (24) est fermée.

5. Machine à café selon la revendication 4, **caractérisée en ce que** la zone de l'élément poussoir (48), en interaction avec la dosette à café, est conçue dans l'espace de telle sorte qu'il se produit une étanchéité du passage par complémentarité de forme dans l'état non enfoncé dans la chambre d'infusion (24).

6. Machine à café selon la revendication 4, **caractérisée en ce que** l'élément poussoir (48) agit sur la dosette à café indirectement par un élément à feuille étanchéifiant le passage.

7. Machine à café selon la revendication 4, **caractérisée en ce qu'**une barre de commande de l'élément poussoir ou l'élément poussoir même est monté de façon étanche dans son guidage (50) à travers la partie supérieure de chambre d'infusion (28).
